# EUROPÄISCHE PATENTSCHRIFT

(11) **EP 0 636 069 B1**
(45) Veröffentlichungstag und Bekanntmachung des Hinweises auf die Patenterteilung: **01.05.1996**
(21) Anmeldenummer: 94908312.5
(22) Anmeldetag: 15.02.1994
(51) Int. Cl.: B60R 1/12, B60R 7/08

(54) **INNENRÜCKSPIEGEL EINES KRAFTFAHRZEUGES MIT INTEGRIERTEM ABLAGEFACH**
MOTOR VEHICLE INNER REARVIEW MIRROR WITH INTEGRATED GLOVE BOX
RETROVISEUR INTERIEUR AVEC VIDE-POCHES INTEGRE POUR VEHICULES A MOTEUR

(30) Priorität: 15.02.1993 CH 446/93; 07.05.1993 CH 1403/93; 18.06.1993 CH 1813/93; 19.11.1993 CH 3451/93
(43) Veröffentlichungstag der Anmeldung: 01.02.1995
(73) Patentinhaber: fischerwerke Artur Fischer GmbH & Co. KG, D-72178 Waldachtal (DE)
(72) Erfinder: ACKERET, Peter, CH-8700 Küsnacht (CH)
(86) Internationale Anmeldenummer: EP9400432
(87) Internationale Veröffentlichungsnummer: WO9418031

(56) Entgegenhaltungen:
- DE-A- 4 122 472
- FR-A- 1 517 848
- FR-A- 2 648 770
- GB-A- 2 217 592
- US-A- 4 576 320
- US-A- 4 890 907

## Beschreibung

Die vorliegende Erfindung betrifft einen Innenrückspiegel eines Kraftfahrzeuges (Kfzg.), welcher mit einem Ablagefach versehen ist. Ein Ablagefach, das ein ausfahrbare Halterung aufweist, mittels welcher ein im Ablagefach untergebrachtes Aufbewahrungsgut in eine äussere Raststellung verfahren werden kann, in welcher das Aufbewahrungsgut in die Halterung eingelegt - bzw. aus dieser entnommen werden kann, ist aus FR-A-2 648 770 bekannt.

Ein Innenrückspiegel mit Ablagefach (Ascher) geht aus FR-A-1 517 848 hervor In Kfzg. besteht ein grosser Bedarf an Ablagemöglichkeiten zur Aufbewahrung verschiedener Gegenstände wie beispielsweise Strassenkarten, Papiertaschentücher, Kleingeld für Parkuhren, Tonbandkassetten, Compact Disks, Brillen, etc.

Immer öfter werden die ursprünglich für die Unterbringung dieser Gegenstände vorgesehenen Ablagen zum Einbau von Zusatzausrüstungen, wie beispielsweise Beifahrer-"Airbag", Telefone sowie Ablagen für Tonträger benötigt.

Verschiedene Gegenstände, beispielsweise Brillen, müssen (bei pötzlich auftretender Blendung oder Abdunklung) oft kurzfristig während der Fahrt handhabbar sein, sodass dazu lediglich eine Hand zur Verfügung steht.

Es ist daher erforderlich, dass beispielsweise Brillen in Kfzg. so aufbewahrt werden können, dass sie vom Fahrer einhändig aus dem Ablagefach entnommen bzw. in dieses eingelegt werden können, ohne dass dazu eine den Fahrer ablenkende Aufmerksamkeit erforderlich wäre.

Im aufbewahrten Zustand sollen die Gegenstände vor Staub, Verschmutzung und Verkratzen geschützt sein. Oft ist auch eine Abschirmung gegen Sonneneinstrahlung erwünscht.

Damit die Bedienung durch den Fahrer während der Fahrt möglich ist, muss das Ablagefach einerseits im Kfzg. so anbringbar und bedienbar sein, dass der Blick des Fahrers dazu nicht von der Strasse weichen muss, andererseis darf die Sicht des Fahrers durch das Ablagefach nicht beeinträchtigt werden.

Der Einbau des Ablagefaches in verschiedene Kfzg.-Modelle erfordert ferner eine möglichst universelle Einbauart, die in den einzelnen Kfzg.-Modellen nur minimale und kostengünstige Anpassungen notwendig machen.

Aufgabe der Erfindung ist die Schaffung eines Ablagefaches, das den aufgeführten Anforderungen Rechnung trägt.

Die gemäss der Erfindung zur Lösung dieser Aufgabe vorgesehenen Merkmale sind im Patentanspruch 1 genannt.

Die Anordnung eines Ablagefaches hinter einem Rückspiegel eines Kfzg. ergibt folgende Vorteile:
- Der Bereich zwischen Innenrückspiegel und Frontfenster ist ohnehin durch den Rückspiegel verdeckt und somit vom Fahrgastraum her nicht sichtbar, sodass das Ablagefach im geschlossenen Zustand überhaupt nicht wahrgenommen wird. Das Blickfeld des Fahrers wird somit nicht beeinträchtigt.
- Bei Gebrauch kann das Ablagefach einhändig bequem bedient werden, wobei die Halterung automatisch in eine Position unterhalb bzw. vor dem Rückspiegel verfahren wird, wo die Handhabungen zum Einlegen und Entnehmen des Aufbewahrungsgutes einhändig durch den Fahrzeuglenker ohne Ablenkung möglich ist.
- Im ausgefahrenen Zustand der Halterung ist die Störung des Sichtfeldes trotz optimaler Präsentation des Aufbewahrungsgutes auf ein Minimum reduziert und die Sicht in den Rückspiegel bleibt ungestört.
- Lediglich durch das Auswechseln des Rückspiegels kann das Ablagefach in jedes Kfzg. eingebaut werden, ohne dass kostspielige Aenderungen oder Anpassungen an der Innenausstattung notwendig wären, oder der ohnehin knappe Einbauplatz im Armaturenbrett oder in der Mittelkonsole beansprucht würden.
- Durch Integration des Ablagefaches in eine, in jedem Kfzg. bereits vorhandene Baugruppe, an welcher lediglich Anpassungen notwendig sind, kann eine Optimierung der Herstellkosten erreicht werden.
- Bei eingefahrener Halterung ist das Aufbewahrungsgut im Ablagefach optimal vor Staub, Verunreinigungen, Beschädigungen und Wärme geschützt.

Zur bequemen Handhabung kann die Halterung motorisch oder durch Federkraft bewegt werden, wobei sich bei letzterer eine Dämpfung der Ausfahrbewegung, beispielsweise durch eine Viskosebremse, empfiehlt.

Die Halterung kann als Behälter zur Aufnahme verschiedener Aufbewahrungsgüter oder zur Aufnahme bestimmter Gegenstände speziell ausgebildet sein.

Anstelle von mobilen Aufbewahrungsgütern könnten natürlich auch Bedienungselemente oder Anzeigevorrichtungen, welche zum Gebrauch aus dem Ablagefach ausgefahren würden, in die Halterung fest eingebaut werden.

Ganz besonders geeignet ist das erfindungsgemässe Ablagefach zur Aufbewahrung einer Brille, wobei für diese Anwendung die Halterung vorteilhafterweise so ausgebildet würde, dass die Brille mit nur einer Hand in die Halterung eingesetzt bzw. aus dieser entnommen werden könnte, und auch das Oeffnen und Schliessen der Brillenbügel einer in die Halterung eingesetzten Brille einhändig möglich wäre.

In der nachfolgenden Beschreibung wird die bevorzugte Bauweise für die Aufbewahrung einer Brille beschrieben, ohne dass natürlich die Ablage gemäss der Erfindung auf diese Anwendung beschränkt wäre.

Weitere Merkmale und Vorteile der Erfindung ergeben sich aus den Unteransprüchen bzw. aus der Beschreibung von Ausführungsbeispielen.

Ausführungsbeispiele der Erfindung werden nachstehend unter Bezugnahme auf die beigefügten Zeichnungen näher erläutert.
- Fig. 1: zeigt im Querschnitt in schematischer Darstellung das Ablagefach mit einer ersten Ausführungsform der Halterung in der inneren und in der äusseren Raststellung.
- Fig. 2 und 3: zeigen in schematischer Darstellung eine Detailkonstruktion der Verriegelungsmechanik der Halterung gemäss Ausführungsform von Fig. 1 in der Verriegelungs- und Entriegelungsstellung.
- Fig. 4: zeigt im Querschnitt eine Teilansicht des Ablagefaches gemäss Ausführungsform von Fig. 1 in schematischer Darstellung mit einer Variante des Oeffnungswinkels der Halterung in der äusseren Raststellung.
- Fig. 5 bis 7: zeigen in Längs- und Querschnitten in schematischen Darstellungen das Ablagefach mit einer zweiten Ausführungsform der Halterung in der inneren und in der äusseren Raststellung.
- Fig. 8: zeigt in schematischer Darstellung eine Detailkonstruktion der Verriegelungsmechanik der Halterung gem. Ausführungsform von Fig. 5 bis 7.
- Fig. 9 und 10: zeigen im Längs- und im Querschnitt in schematischen Darstellungen das Ablagefach mit einer dritter Ausführungsform der Halterung in der inneren und in der äusseren Raststellung.
- Fig. 11 und 12: zeigen in perspektivischer Ansicht und im Querschnitt in schematischen Darstellungen das Ablagefach mit einer vierten Ausführungsform der Halterung in der inneren und in der äusseren Raststellung.
- Fig. 13 bis 18: zeigen in Querschnitten schematische Darstellungen des Ablagefaches mit weiteren Varianten von Halterungen in der äusseren Raststellung.
- Fig. 19 und 20: zeigen in Längs- und Querschnitten in schematischen Darstellungen eine erste Ausführungsform einer Kühlvorrichtung für das Ablagefach.
- Fig. 21 und 22: zeigen in Längs- und Querschnitten in schematischen Darstellungen eine zweite Ausführungsform einer Kühlvorrichtung für das Ablagefach.
- Fig. 23: zeigt im Querschnitt den Innenrückspiegel gem. Ausführungsform von Fig. 1 mit der Halterung in der inneren und in der äusseren Raststellung und einer an der Halterung angeordneten Brillenaufnahme.

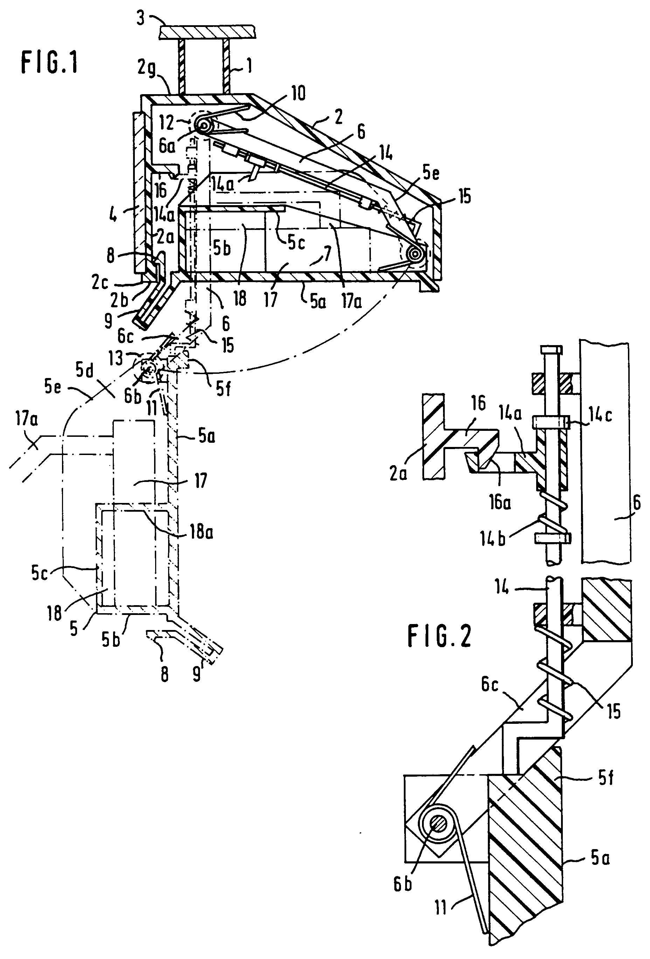

In den Figuren 1 bis 3 wird das Ablagefach mit einer ersten Ausführungsform der Halterung gezeigt.

Ueber ein Konsolenstück 1 ist das Ablagefach 2 am Dach 3 des Kfzg. befestigt. An der Stirnwand 2a des Ablagefaches 2 ist der Rückspiegel 4 angeordnet. Die Halterung 5 ist mit einem Schwenkarm 6 über Achsen 6a, 6b mit dem Ablagefach 2 schwenkbeweglich verbunden.

Das Ablagefach 2 weist an seiner Unterseite 2b eine Gehäuseöffnung 7 auf, welche durch die Rückwand 5a der Halterung 5 verschlossen wird, wenn sich diese in der inneren Raststellung befindet.

Beim Lösen der Verriegelung 8 über den Tastenarm 9 bewegt sich der Schwenkarm 6 um die Achse 6a unter Einwirkung der Kraft der Schenkelfeder 10 aus der Gehäuseöffnung 7 nach unten.

Gleichzeitig schwenkt die Halterung 5 um die Achse 6b unter Einwirkung der Kraft der Schenkelfeder 11 nach unten aus dem Ablagefach 2 in die äussere Raststellung. Der Schwenkarm 6 ist an seinem, der Halterung 5 zugekehrten Ende 6c, abgewinkelt, so dass die Achse 6b in der äusseren Raststellung des Schwenkarmes 6 mit der Ebene des Rückspiegels 4 fluchtet.

Durch den Anschlag 5f wird der Oeffnungswinkel der Halterung 5 in ihrer äusseren Raststellung so begrenzt, dass die Rückwand 5a der Halterung 5 im wesentlichen parallel zur Breitseite des Rückspiegels 4 liegt.

Durch Dämpfungselemente 12,13 werden die beiden Schwenkbewegungen abgedämpft.

Im Schwenkarm 6 ist ein Klinkenhebel 14 gegen die Klinkenfeder 15 längsverschieblich gelagert. Am Klinkenhebel 14 ist ein Sperriegel 14a gegen die Regelfeder 14b längsverschieblich gelagert.

Beim Erreichen der äusseren Raststellung des Schwenkarmes 6 läuft der Sperriegel 14a auf die Auflaufschräge 16a der Klinke 16, welche an der Stirnwand 2a des Schutzgehäuses 2 angeordnet ist. Der Sperriegel 14a wird dabei gegen die Kraft der Riegelfeder 14b ausgelenkt und rastet in der Klinke 16 ein.

Durch die Verriegelung des Schwenkarmes 6 am Ablagefach 2 wird sichergestellt, dass die Halterung 5 in ihrer äusseren Raststellung eine stabile Position einnimmt und beim Einlegen der Brille 17 in die Brillenaufnahme 18 sowie beim Zuklappen der Brillenbügel 17a nicht nach hinten wegweichen kann.

Zum Schliessen wird die Halterung 5 am Tastenarm 9 nach oben geschwenkt. Dadurch kann sich der Klinkenhebel 14 unter Einwirkung der Klinkenfeder 15 nach unten bewegen. Ueber einen Mitnehmer 14c wird dabei der Sperriegel 14a soweit nach unten verschoben, bis er aus der Klinke 16 ausrastet und den Schwenkarm 6 freigibt. Nach Lösen der Verriegelung kann der Schwenkarm 6 gegen die Kraft der Schenkelfeder 10 ins Ablagefach 2 zurückgestossen und gleichzeitig die Halterung 5 gegen die Kraft der Schenkelfeder 11 eingeklappt werden, bis die innere Raststellung erreicht ist und die Verriegelung 8 im Ablagefach 2 einrastet.

Die Halterung 5 weist eine Bodenwand 5b sowie eine parallel zur Rückwand 5a verlaufende Frontwand 5c auf, welche zusammen mit diesen die U-förmige Brillenaufnahme 18 bilden, die auf beiden Stirnseiten durch Seitenwände 5d abgeschlossen wird.

Zur Zentrierung der Brille 17 ist in der Mitte der Brillenaufnahme 18 eine Zentriernase 18a angeordnet, welche in die Nasenausnehmung einer eingelegten Brille 17 eingreift.

Die Brille 17 kann parallel zur Rückwand 5a nach oben aus der Brillenaufnahme 18 herausgenommen bzw. von oben in diese eingelegt und die Brillenbügel 17a hinter der Frontwand 5c auf- bzw. zugeklappt werden.

Die Konturen der frontseitigen Endkanten 5e der beiden Stirnwände 5d sind so ausgebildet, dass sie die Kontur einer in die Brillenaufnahme 18 eingelegten Brille 17 überragen, sodass sich die Brille 17 beim Schwenken der Halterung 5 von einer Raststellung in die andere Raststellung nicht am Ablagefach 2 im Bereich seiner unteren Frontkante 2c verhängen kann.

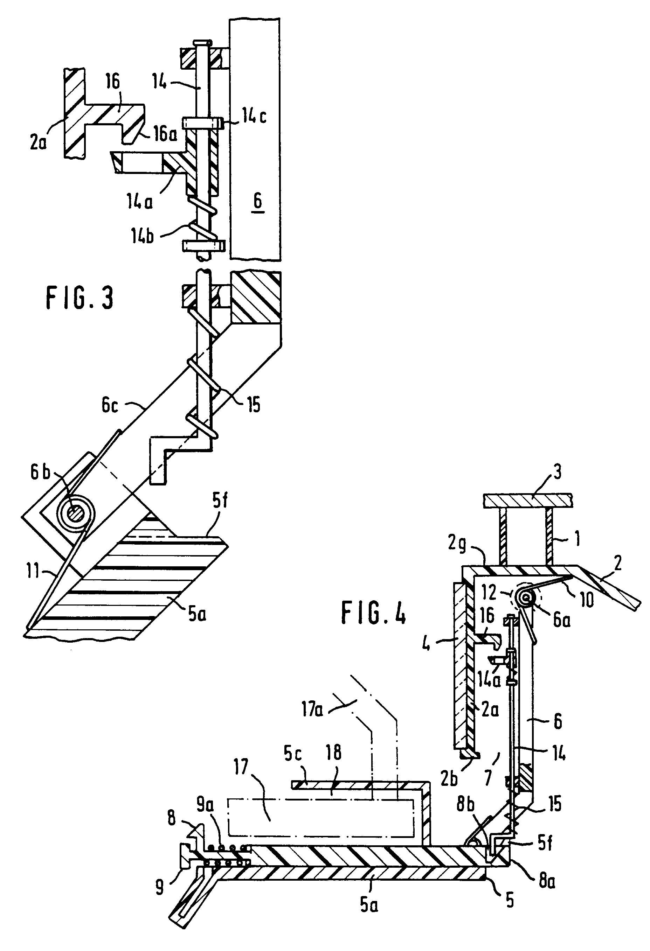

Figur 4 zeigt eine Teilanansicht einer Variantedes Ablagefaches gemäss Fig. 1 bis 3.

In der äusseren Raststellung wird bei dieser Ausführungsform der Oeffnungswinkel der Halterung 5 durch den Anschlag 5f so begrenzt, dass die Rückwand 5a der Halterung 5 im wesentlichen rechtwinklig zur Breitseite des Rückspiegels 4 liegt.

Die Brille 17 kann parallel zur Rückwand 5a nach vorne aus der Brillenaufnahme 18 entnommen bzw. von vorne in diese eingelegt und die Brillenbügel 17a hinter der Frontwand auf- bzw. zugeklappt werden.

Zum Lösen des Klinkenhebels 14 aus der Klinke 16 wird der Riegelarm 8a durch die Taste 9 parallel zur Rückwand 5a gegen die Kraft der Tastenfeder 9a soweit nach hinten gedrückt, bis sich der Klinkenhebel 14 in die Ausnehmung 8b des Riegelarmes 8a absenken kann. Dadurch wird die Verriegelung freigegeben und der Schwenkarm 6 kann über die Halterung 5 in die innere Raststellung gestossen werden bis die Verriegelung 8, welche über die Taste 9 gegen die Kraft der Tastenfeder 9a lösbar ist, im Ablagefach einrastet.

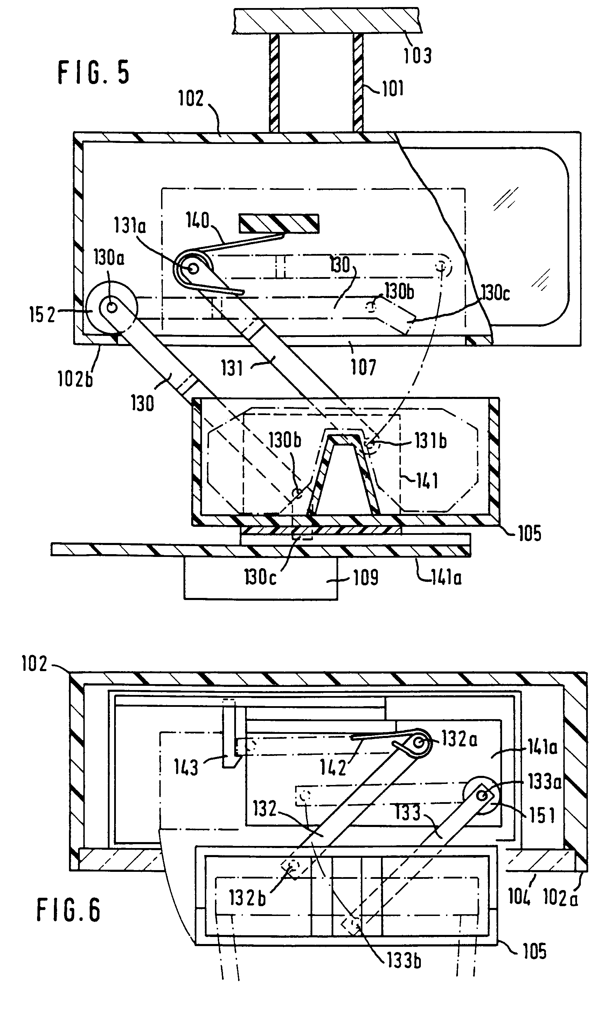

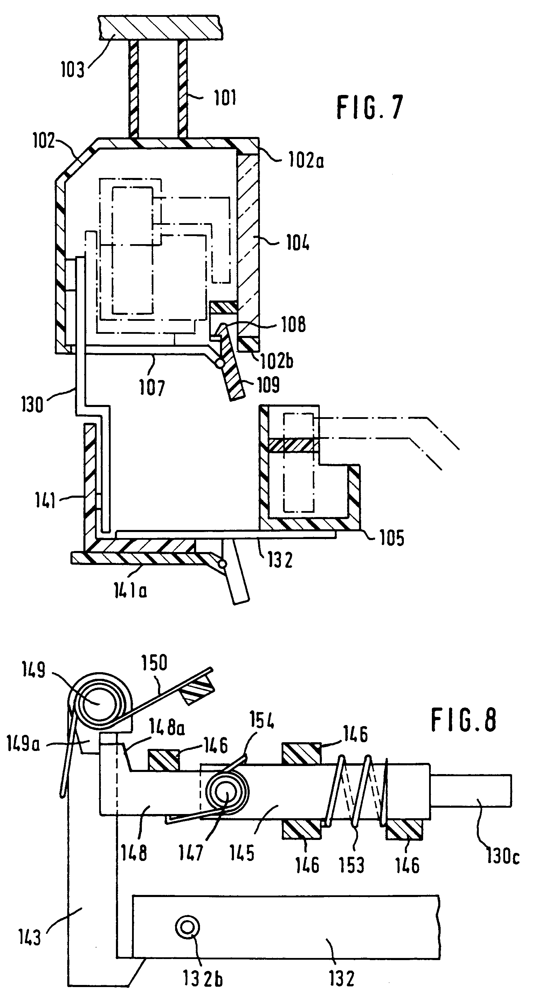

In den Figuren 5 bis 8 wird das Ablagefach mit einer zweiten Ausführungsform der Halterung gezeigt.

Ueber ein Konsolenstück 101 ist das Ablagefach 102 am Dach 103 des Kfzg. befestigt.

An der Stirnwand 102a des Ablagefaches 102 ist der Rückspiegel 104 angeordnet.

Die Halterung 105 ist über ein erstes, vertikal bewegliches Paar von Parallelführungsarmen 130, 131 und ein zweites, horizontal bewegliches Paar von Parallelführungsarmen 132, 133 mit dem Ablagefach 102 schwenkbeweglich verbunden.

Das Ablagefach 102 weist an seiner Unterseite 102b eine Gehäuseöffnung 107 auf, welche durch die Bodenwand 141a des Trägers 141 verschlossen wird, wenn sich die Halterung 105 in der inneren Raststellung befindet.

Beim Lösen der Verriegelung 108 über den Tastenarm 109 bewegen sich die Parallelführungsarme 130, 131 um die Gelenke 130a, 131a unter Einwirkung der Kraft der Schenkelfeder 140 aus der Gehäuseöffnung 107 nach unten und verlagern die Halterung 105 in eine Zwischenposition senkrecht unter das Ablagefach 102.

An den Parallelführungsarmen 130, 311 ist über die Gelenke 130b, 11b der L-förmige Träger 141 angelenkt. An der Bodenwand 141a des Trägers 141 sind über die Gelenke 132a, 133a die Parallelführungsarme 132, 133 angelenkt, welche über die Gelenke 132b, 133b mit der Halterung 105 verbunden sind.

Der Parallelführungsarm 130 ist über das Gelenk 130b hinaus um einen Winkelabschnitt 130c verlängert. Während der Abwärtsbewegung des Parallelführungsarmes 130 drückt der Winkelabschnitt 130c auf den Stössel 145, der in den Führungen 146 auf der Bodenplatte 141a längsverschieblich gelagert - und gegen die Kraft der Stösselfeder 153 verlagerbar ist.

Ueber das Schwenklager 147 ist der Stössel 145 mit dem Stösselfortsatz 148 schwenkbar verbunden. Auf der Bodenplatte 141a ist der Rückhaltehebel 13 im Lager 149 drehbeweglich gelagert. Der Rückhaltehebel 143 hat einen Nocken 149a, auf den der Stösselfortsatz 148 aufläuft und den Rückhaltehebel 143 um das Lager 149 soweit verschwenkt, bis der Parallelführungsarm 132 freigegeben wird.

Nachdem die hintere Kante1 48a des Stösselfortsatzes 148 den Nocken 149a überfahren hat, wird dieser freigegeben und der Rückhaltehebel 143 dreht sich unter der Krafteinwirkung der Rückstellfeder 150 in seine Ausgangsposition zurück.

Wenn der Parallelführungsarm 132 freigegeben wird, fahren die beiden Parallelführungsarme 132, 133 unter der Krafteinwirkung der Schenkelfeder 142 aus und bewegen die Halterung 105 unter den Rückspiegel 104 hindurch in die äussere Raststellung.

Sowohl die vertikale wie auch die horizontale Schwenkbewegung der Parallelführungsarme 130, 131 und 132, 133 sind über Dämpfungselemente 151, 152 abgedämpft.

Durch die Freigabemechanik wird sichergestellt, dass die horizontale Schwenkbewegung der Parallelführungsarme 132, 133 erst dann freigegeben wird, wenn die vertikale Schwenkbewegung der Parallelführungsarme 130, 131 abgeschlossen ist und die Halterung 105 komplett aus dem Ablagefach 102 ausgefahren ist und ihre Zwischenposition senkrecht unter dem Ablagefach 102 erreicht hat.

Beim Zurückschieben der Halterung 105 von der äusseren Raststellung in die innere Raststellung wird sie zuerst wieder in die Zwischenposition unter das Ablagefach 102 geschoben, wo der Parallelführungsarm 132 im Rückhaltehebel 143 einrastet und gegen die Kraft der Schenkelfeder 142 festgehalten wird.

Anschliessend kann die Halterung 105 zusammen mit dem Träger 141 durch die Gehäuseöffnung 107 nach oben ins Ablagefach 102 eingefahren werden, bis die innere Raststellung erreicht ist und die Verriegelung 108 einrastet.

Beim Hochwenken des Parallelführungsarmes 130 gibt der Winkelabschnitt 130c den Stössel 145 frei, welcher sich unter Krafteinwirkung der Stösselfeder 153 in seine Ausgangslage zurückbewegt. Dabei schwenkt der Stösselfortsatz 148 gesteuert durch seine hintere Kante 148a aus, um den Nocken 149a passieren zu können und wird anschliessend von der Schwenkfeder 154 in seine Ausgangslage zurückgeschwenkt.

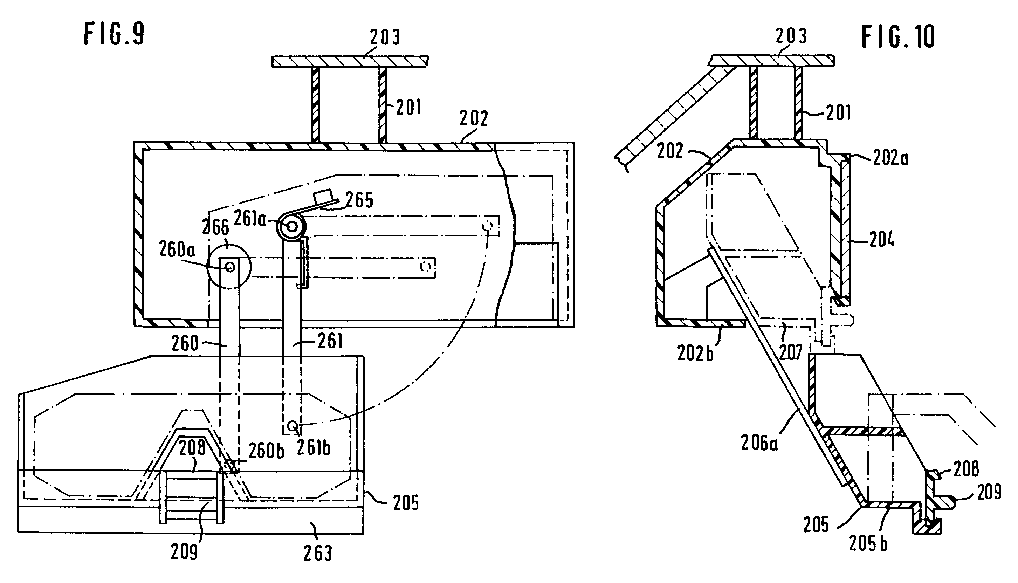

In den Figuren 9 und 10 wird das Ablagefach mit einer dritten Ausführungsform der Halterung gezeigt.

Ueber das Konsolenstück 201 ist das Ablagefach 202 am Dach 203 des Kfzg. befestigt. An der Stirnwand 202a des Ablagefaches 202 ist der Rückspiegel 204 angeordnet. Die Halterung 205 ist über ein Paar von Parallelführungsarmen 260, 261 mit dem Ablagefach 202 über die Gelenke 260a, 261a, 260b, 261b, schwenkbeweglich verbunden. Dabei sind die Parallelführungsarme 260, 261 am Ablagefach 202 sowie an der Halterung 205 in einer Schräglage befestigt, sodass sich die Halterung 205 während ihrer Verlagerung aus dem Ablagefach 202 nach unten, gleichzeitig schräg nach vorne bewegt.

Das Ablagefach 202 weist an seiner Unterseite 202b eine Gehäuseöffnung 207 auf, welche durch die Bodenwand 205b der Halterung 205 verschlossen wird, wenn sich diese in der inneren Raststellung befindet.

Beim Lösen der Verriegelung 208 über den Tastenarm 209 bewegen sich die Parallelführungsarme 260, 261 um die Gelenke 260a, 261a unter Einwirkung der Kraft der Schenkelfeder 265 aus der Gehäuseöffnung 207 schräg nach unten und verlagern dabei die über die Gelenke 260b, 261b parallel geführte Halterung 205 in die äussere Raststellung unterhalb und vor dem Rückspiegel 204. Die Ausfahrbewegung wird über ein Dämpfungselement 266 abgedämpft.

Beim Zurückschieben der Halterung 205 aus der äusseren in die innere Raststellung wird sie über die Parallelführungsarme 260, 261 schräg nach hinten oben durch die Gehäuseöffnung 207 ins Ablagefach 202 zurückgeführt, bis die Verriegelung 208 am Ablagefach 202 einrastet.

An der Halterung 205 ist eine Griffleiste 263 angeordnet, an der die Halterung 205 während ihrer Schwenkbewegung von einer Raststellung in die andere Raststellung gehalten werden kann.

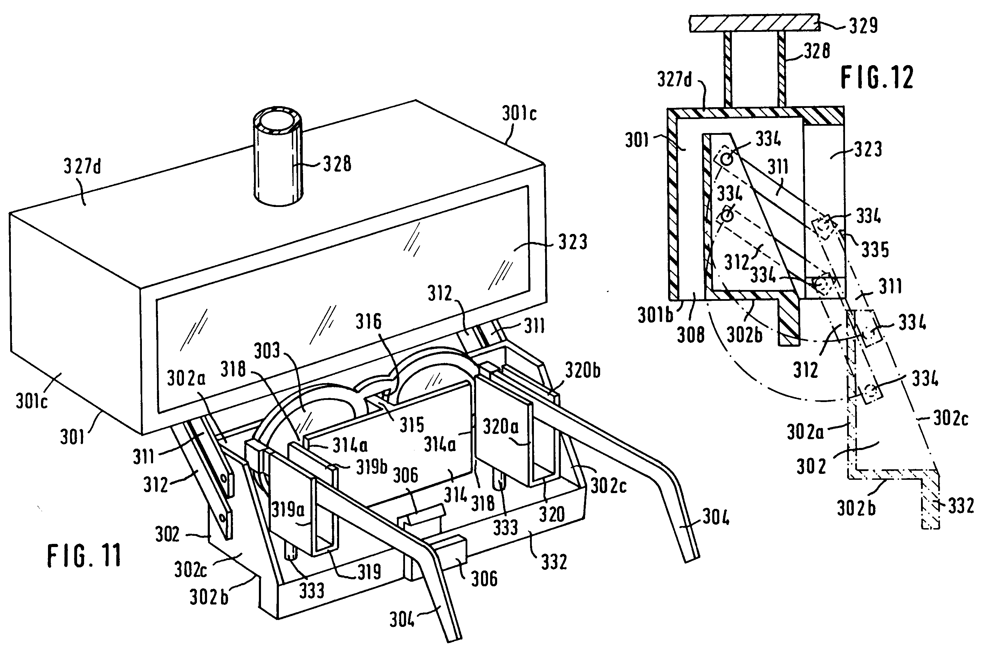

In den Figuren 11 und 12 ist das Ablagefach 301 über ein Konsolenstück 328 am Dach der Kfzg-Karosserie 329 befestigt. Im Ablagefach 301 ist ein Rückspiegel 323 integirert. Das Ablagefach 301 weist an seiner unteren Breitseite 301b eine Gehäuseöffnung 308 auf. Ueber Parallelführungen 311, 312 ist die Halterung 302 drehbeweglich mit dem Ablagefach 301 verbunden. Die Parallelführungen 311, 312 können um Lager 334 welche an den Seitenwänden 301c des Ablagefaches 301 und an Seitenwänden 302c der Halterung 302 angeordnet sind, drehen.

In der inneren Raststellung ist die Halterung 302 im Ablagefach 301 eingeschlossen. Die Abdeckung 302b auf der Unterseite der Halterung 302 verdeckt dabei im wesentlichen die Gehäuseöffnung 308 des Ablagefaches 301. Nach manuellem Lösen der Verriegelung 306, welche in der Verschlussleite 332 der Halterung 302 angeordnet ist, bewegt sich die Halterung unter Einwirkung von Federkraft nach unten aus dem Ablagefach 301 in ihre äussere Raststellung. Zum Schliessen wird die Halterung 302 an der Verschlussleite 332 aus der äusseren Raststellung gegen die Federkraft ins Ablagefach 301 zurückgeschoben, bis die Verriegelung 306 einrastet.

Die Halterung 302 hat einen L-förmigen Querschnitt, welcher durch die Rückwand 302a und die Bodenwand 302b gebildet und auf ihren Stirnseiten durch die beiden Seitenwände 302c abgeschlossen wird. Eine Abstützwand 314 erstreckt sich senkrecht von der Bodenwand 302b nach oben und parallel zur Rückwand 302a. Gemeinsam mit dieser bildet sie die Brillenhalterung. In der Mitte sind die Rückwand 302a und die Abstützwand 314 über eine Zentrierung 315 miteinander verbunden, welche in den Nasenausschnitt 316 einer eingesetzten Brille 303 eingreift und diese in der Brillenhalterung zentriert. Die Abstützwand 314 weist an ihren seitlichen Enden 314a Durchbrüche 318 für die Brillenbügel 304 auf, welche sich im wesentlichen über die Höhe der Abstützwand 314 erstrecken.

Im Bereich der Durchbrüche 318 sind Arme 319, 320 angeordnet, welche über Drehachsen 333 in der Bodenwand 302b drehbar gelagert sind. Die Brillenbügel 304 werden beim Einlegen der Brille 303 zwischen die Mitnehmer 319a, 319b, 320a, 320b der Arme319, 320 eingesetzt und beim Drehen der Arme um die Drehachsen 333 hinter der Abstützwand 314 auf- bzw. zugeklappt. Beim Entnehmen der Brille wird diese nach oben aus der Brillenhalterung gehoben und dabei die Brillenbügel aus den Mitnehmern herausgezogen. Die Drehung der Arme 319, 320 wird (in nicht dargestellter Form) durch die Bewegung der Halterung von einer Raststellung in die andere Raststellung aktiviert und dadurch die Brillenbügel beim Ein- bzw. Ausfahren der Halterung geschlossen bzw. geöffnet.

Für die Befestigung des Innenrückspegels im Kfzg, ist ein Konsolenstück 328 vorgesehen, welches mit einer der Seitenflächen 301c oder der Deckfläche 327d des Ablagefaches 301 verbunden ist. Dies ermöglicht eine sehr kompakte Bauweise mit minimalen Abmessungen. Das Drehen und Schwenken des Ablagefaches 301 zum Einstellen des Rückspiegels 323 erfolgt (in nicht dargestellter Form) über Gelenke, zwischen dem Konsolenstück 328 und dem Ablagefach 301 bzw. der Kfzg.-Karosserie 329.

Die äussere Raststellung der Halterung 302 wird durch einen Anschlag 335, gegen den die Federkraft die Parallelführungen 311 drückt, bestimmt. Dabei ist der Drehwinkel der Parallelführung 311 so festgelegt, dass die Halterung in ihrer äusseren Raststellung vor den Rückspiegel 323 zu liegen kommt, sodass die Brille 303 bequem in die Brillenhalterung eingesetzt bzw. entnommen werden kann.

Durch die Parallelführungen 311, 312 wird dafür gesorgt, dass die Brillenhalterung während ihrer Schwenkbewegung in paralleler Lage gehalten wird.

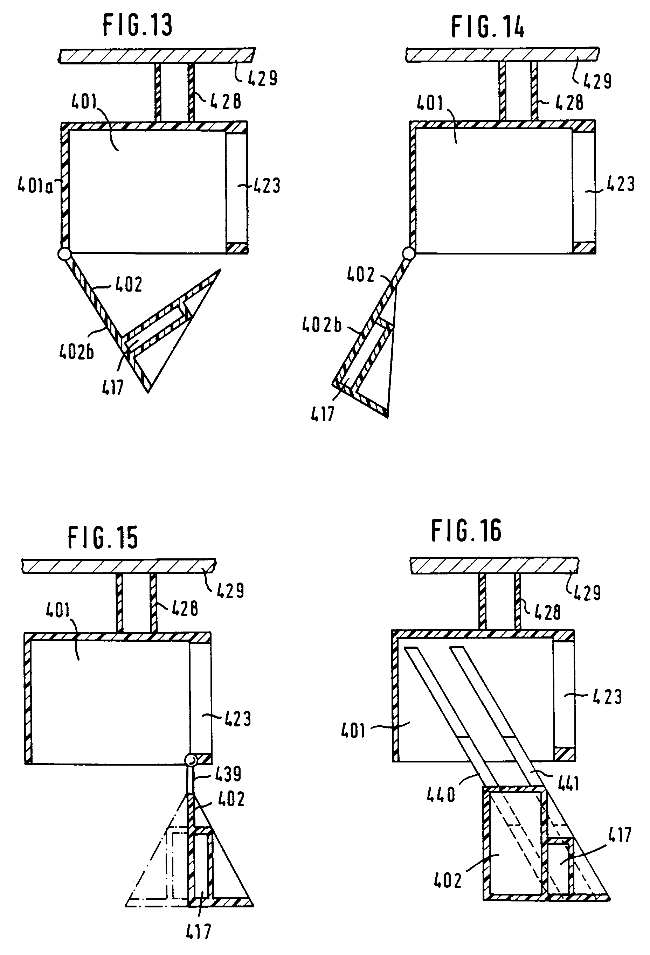

Figuren 13 bis 18 zeigen alternative Möglichkeiten, wie die Halterung relativ zum Ablagefach bewegt werden kann.

In Figur 13 ist die Halterung 402 im Bereich des unteren Randes der Rückwand 401a am Ablagefach 401 angelenkt und kann soweit nach unten aufgeklappt werden, bis die Brille aus der taschenförmigen Vertiefung 417, welche senkrecht auf der Abdeckung 402b angeordnet ist, nach oben entnommen werden kann.

In Figur 14 ist eine analoge Verbindung zwischen dem Ablagefach 401 und der Halterung 402 vorgesehen wie in Figur 13, wobei die taschenförmige Vertiefung 417 parallel zur Abdeckung 402b angeordnet ist, sodass die Halterung 402 entsprechend weiter aus dem Ablagefach 401 ausgeklappt werden muss, bis die Brille entnommen werden kann.

In Figur 15 ist die Halterung 402 im Bereich des unteren Randes des Rückspiegels 423 angelenkt. Nach dem Aufklappen der Halterung 402 in ihre äussere Raststellung kann sie um eine Achse 439 gedreht werden, sodass die taschenförmige Vertiefung 417 von vorne frei zugänglich ist.

Figur 16 zeigt eine Variante mit einer längsverschieblichen Halterung 402 , welche über Parallelführungen 440, 441 schräg nach unten aus dem Ablagefach 401 herausbewegt werden kann.

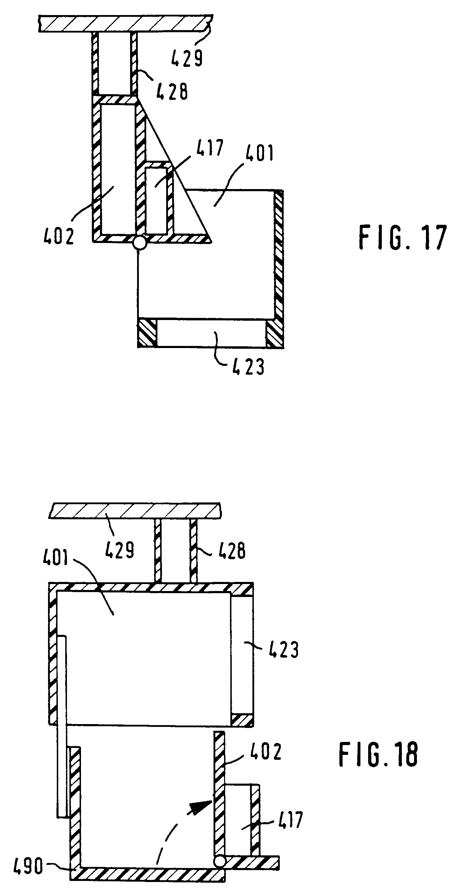

Figur 17 zeigt eine Variante, bei der dlie Halterung 402 über das Konsolenstück 428 mit der Kfzg.-Karosserie 429 verbunden ist. Das Ablagefach 401, welches den Rückspiegel 423 enthält, ist an die Halterung 402 angelenkt und kann zusammen mit dem Rückspiegel 423 soweit nach unten bewegt werden, dass die Brille bequem in die Halterung 402 eingesetzt bzw. aus dieser entnommen werden kann.

Figur 18 zeigt eine Variante, bei der die Halterung 402 aus einem senkrecht aus dem Ablagefach nach unten bewegbaren Träger 490 drehbar angeordnet ist, wobei die Halterung 402 bei bei ausgefahrenem Träger 490 nach vorne aufgeklappt und damit die Brille von der liegenden Aufbewahrungsposition in eine senkrechte Entnahme- bzw. Einsetzposition geschwenkt werden kann.

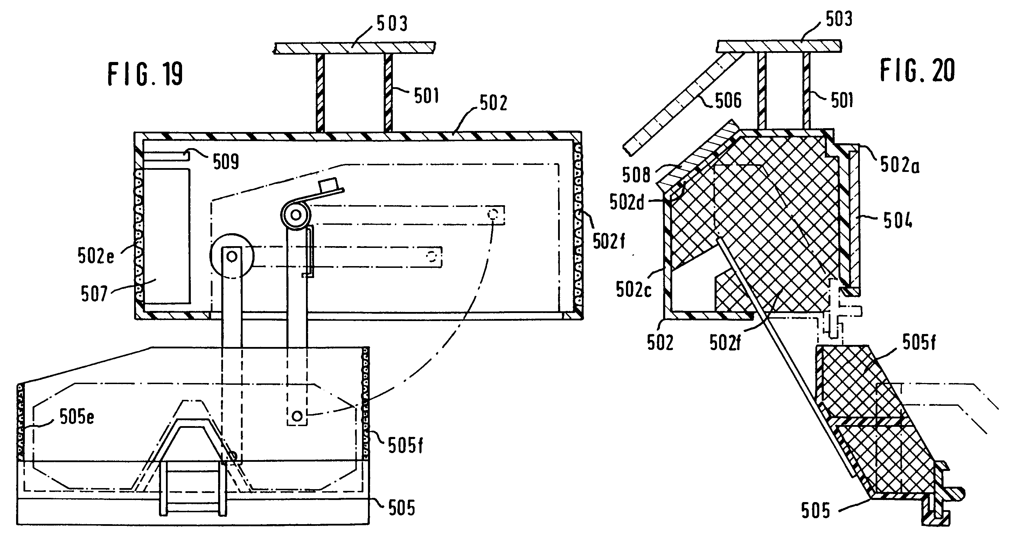

Figuren 19 und 20 zeigen eine erste Ausführungsform einer Kühlvorrichtung für das Ablagefach.

Ueber das Konsolenstück 501 ist das Ablagefach 502 am Dach 503 des Kfzg. befestigt. An der Stirnwand 502a des Ablagefaches 502 ist der Rückspiegel 504 angeordnet.

Die Rückwand 502c und die Deckwand 502d des Ablagefaches 502 liegen senkrecht unter dem Frontfenster 506 des Kfzg. Bei starker Sonneneinstrahlung kann sich daher die Aufbewahrungsvorrichtung stark erwärmen.

Um die im Ablagefach 502 gestaute Wärme abzuführen, ist an der, mit Luftdurchlässen versehenen Seitenwand 502e des Ablagefaches 502 ein elektrisch betriebener Ventilator 507 angeordnet, welcher die, über die Luftdurchlässe an der Seitenwand 502f einströmende Luft aus dem Ablagefach 502 absaugt.

Damit die Luft im Ablagefach 502 möglichst ungehindert zirkulieren kann, sind auch die seitlichen Wände 505e und 505f der Halterung 505 mit Luftdurchlässen versehen.

Der Ventilator 507 wird vorzugsweise über einen, gegen das Frontfenster 506 gerichteten Sonnenkollektor 508 mit Strom versorgt, wobei auch eine Speisung über einen im Ablagefach 502 angeordneten Temperaturfühler 509 vom Bordnetz möglich ist.

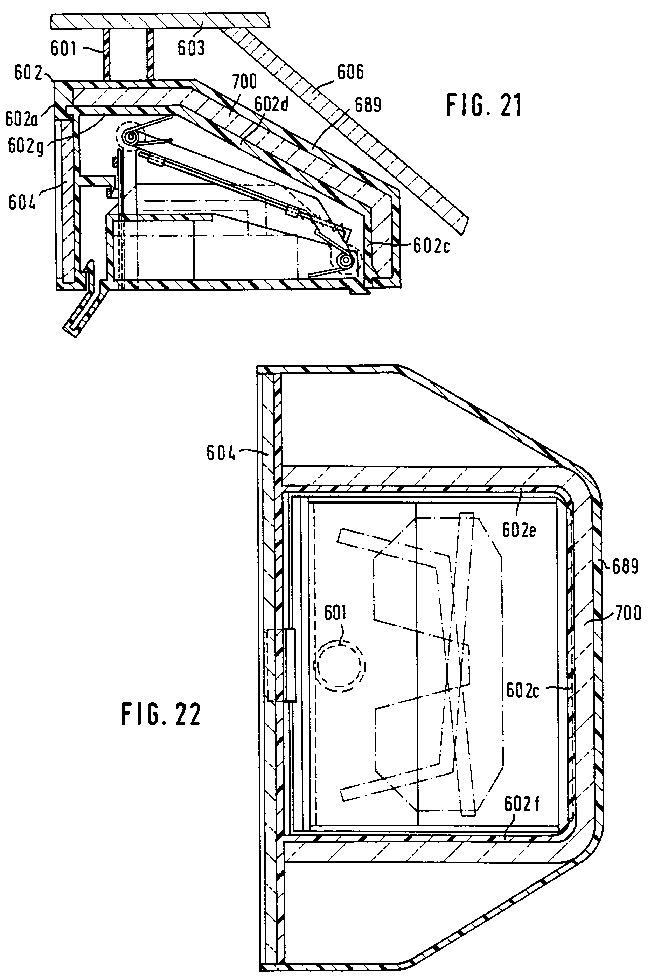

Figuren 21 und 22 zeigen eine zweite Ausführungsform einer Kühlvorrichtung für das Ablagefach.

Ueber das Konsolenstück 601 ist das Ablagefach 602 am Dach 603 des Kfzg. befestigt. An der Stirnseite 602a des Ablagefaches 602 ist der Rückspiegel 604 angeordnet.

Die Rückwand 602c, die beiden Seitenwände 602e, 602f, sowie die Deckwände 602d, 602g des Ablagefaches 602, welche im unmittelbaren Einstrahlungsbereich der Sonne durch das Frontfenster 606 liegen, sind mit einer Wärmeschutzhaube 700 aus einem hochisolierenden Wärmedämmstoff abgedeckt.

Die Wärmeschutzhaube 700 ist als Formteil zwischen den Wänden 602c, 602d, 602g, 602e, 602f des Ablagefaches 602 und der an diesem befestigten Abdeckung 689 eingelegt.

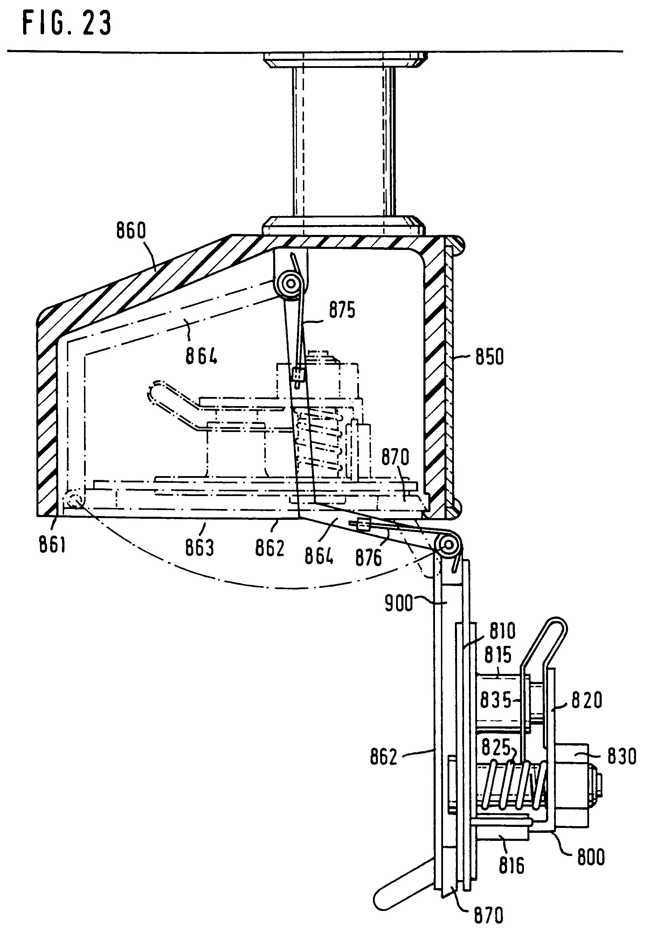

Figur 23 zeigt eine Ausführungsform gemäss Fig. 1 mit einer über einen Schwenkarm 865 mit dem Ablagefach 860 verbundenen Halterung 900. An der Halterung 900 ist eine Brillenaufnahme 800 angeordnet mit einer Rückwand 810 und einer über Parallelführungen 815, 816 mit dieser beweglich verbundenen Andruckplatte 820, welche durch eine Feder 825 gegen die Verstellmutter 830 gedruckt wird.

Durch Drehen der Verstellmutter 830 kann der Abstand zwischen der Rückwand 810 und der Andruckplatte 820 stufenlos an die Dicke einer eingesetzten Brille angepasst werden.

Durch die zwischen der Rückwand 810 und der Andruckplatte 820 angeordnete Federplatte 835 wird einerseits sichergestellt, dass die Brille beim Drehen der Verstellmutter 830 nicht beschädigt wird und andererseits die Brille auch bei enger Anpassung ohne grossen Druck aus der Brillenaufnahme 800 entnommen bzw. in diese eingesetzt werden kann.

Durch die Zentrierung 815, welche in die Nasenausnehmung einer eingesetzten Brille eingreift, wird diese in der Brillenaufnahme seitlich zentriert.

Die Brille wird mit der Breitseite parallel zur Ebene des Rückspiegels 850 in die Brillenaufnahme 800 eingesetzt bzw. aus dieser entnommen.

In der inneren Raststellung der Halterung 900 liegt die Brille mit ihrer Breitseite im wesentlichen senkrecht zur Ebene des Rückspiegels 850 im Ablagefach.

## Patentansprüche

1. Innenrückspiegel für ein Kfzg. mit einem Ablagefach (2, 102, 202, 301, 401, 502), welches hinter dem Rückspiegel (4, 104, 204, 323, 423, 504, 850) angeordnet ist und auf seiner Unterseite (102b, 301b) eine Gehäuseöffnung (7, 107, 207, 308) aufweist und einer mit dem Ablagefach beweglich verbundenen Halterung (5, 105, 205, 302, 402, 900,) zur Aufnahme eines Aufbewahrungsgutes (17, 303), wobei die Halterung durch die Gehäuseöffnung zwischen einer inneren Raststellung, in der die Halterung im Ablagefach eingeschlossen ist und einer äusseren Raststellung unterhalb des Rückspiegels bewegbar ist, in welcher das Aufbewahrungsgut aus der Halterung entnommen bzw. in diese eingelegt werden kann.

2. Innenrückspiegel nach Anspruch 1, dadurch gekennzeichnet, dass die Gehäuseöffnung (7, 107, 207, 308) durch eine Abdeckung (5a, 141a, 205b, 302c, 402b) verschliessbar ist.

3. Innenrückspiegel nach Anspruch 2, dadurch gekennzeichnet, dass die Abdeckung (5a, 141a, 205b, 302c, 402b) an der Halterung (5, 105, 205, 302, 402, 900) angeordnet ist.

4. Innenrückspiegel nach einem oder mehreren der Ansprüche 1 bis 3, dadurch gekennzeichnet, dass das Ablagefach (2, 102, 202, 301, 401, 502) und die Halterung (5, 105, 205, 302, 402, 900) dreh- bzw. schwenkbeweglich miteinander verbunden sind.

5. Innenrückspiegel nach einem oder mehreren der Ansprüche 1 bis 3, dadurch gekennzeichnet, dass das Ablagefach (2, 102, 202, 301, 401, 502) und die Halterung (5, 105, 205, 302, 402, 900) über Führungen (440, 441) längsverschieblich miteinander verbunden sind.

6. Innenrückspiegel nach einem oder mehreren der Ansprüche 1 bis 3, dadurch gekennzeichnet, dass das Ablagefach (2, 102, 202, 301, 401, 502) und die Halterung (5, 105, 205, 302, 402, 900) über einen Träger (141, 490) miteinander verbunden sind.

7. Innenrückspiegel nach Anspruch 6, dadurch gekennzeichnet, dass das Ablagefach (2, 102, 202, 301, 401, 502) und der Träger (141, 490) dreh-bzw. schwenkbeweglich miteinander verbunden sind.

8. Innenrückspiegel nach Anspruch 6, dadurch gekennzeichnet, dass das Ablagefach (2, 102, 202, 301, 401, 502) und der Träger (141, 490) über Führungen (440, 441) längsverschieblich miteinander verbunden sind.

9. Innenrückspiegel nach einem oder mehreren der Ansprüche 6 bis 8 dadurch gekennzeichnet, dass der Träger (141, 490) und die Halterung (5, 105, 205, 302, 402, 900) dreh- bzw. schwenkbeweglich miteinander verbunden sind.

10. Innenrückspiegel nach einem oder mehreren der Ansprüche 6 bis 8 dadurch gekennzeichnet, dass der Träger (141, 410) und die Halterung (5, 105, 205, 302, 402, 900) über Führungen längsverschieblich miteinander verbunden sind.

11. Innenrückspiegel nach einem oder mehreren der Ansprüche 1 bis 10, dadurch gekennzeichnet, dass die Halterung (5, 105, 205, 302, 402, 900) unter Einwirkung der Kraft von Federn (10, 11, 140, 142) von der einen in die andere Raststellung bewegt wird.

12. Innenrückspiegel nach einem oder mehreren der Ansprüche 1 bis 11, dadurch gekennzeichnet, dass die Halterung (5, 105, 205, 302, 402) in der inneren Raststellung über eine manuell lösbare Verriegelung (8, 9, 9a, 108, 208, 306) im Ablagefach (2, 102, 202, 301, 401, 502) festgehalten wird.

13. Innenrückspiegel nach einem oder mehreren der Ansprüche 1 bis 12, dadurch gekennzeichnet, dass an der Halterung (5, 105, 205, 302, 402, 900) ein Griff (9, 109, 209, 263, 332) angeordnet ist, mittels welchem die Halterung von einer Raststellung in die andere Raststellung geführt werden kann.

14. Innenrückspiegel nach Anspruch 13 dadurch gekennzeichnet, dass der Griff (9, 109, 209, 263, 332) in der inneren Raststellung der Halterung unterhalb des Rückspiegels (4, 104, 204, 323, 423, 504) erfasst werden kann.

15. Innenrückspiegel nach einem oder mehreren der Ansprüche 1 bis 14, dadurch gekennzeichnet, dass die Halterung (5, 105, 205, 302, 402, 900) über einen Schwenkarm (6) mit dem Ablagefach (2, 102, 202, 301, 401, 502) verbunden ist.

16. Innenrückspiegel nach Anspruch 15 dadurch gekennzeichnet, dass der Schwenkarm (6) um eine Achse (6a) parallel zur Breitseite des Rückspiegels (4) drehbar im Ablagefach (2) gelagert ist.

17. Innenrückspiegel nach einem der Ansprüche 15 oder 16 dadurch gekennzeichnet, dass die Halterung (5) um eine Achse (6b) parallel zur Breitseite des Rückspiegels (4) drehbar am Schwenkarm (6) gelagert ist.

18. Innenrückspiegel nach einem oder mehreren der Ansprüche 15 bis 17, dadurch gekennzeichnet, dass der Schwenkarm (6) einen L-förmigen Querschnitt aufweist.

19. Innenrückspiegel nach einem oder mehreren der Ansprüche 15 bis 18, dadurch gekennzeichnet, dass das Gelenk (6b), über welches der Schwenkarm (6) mit der Halterung (5) verbunden ist, in der äusseren Raststellung im wesentlichen mit der Ebene des Rückspiegels (4) fluchtet.

20. Innenrückspiegel nach einem oder mehreren der Ansprüche 15 bis 19, dadurch gekennzeichnet, dass der Schwenkarm (6) in der inneren Raststellung der Halterung (5) im wesentlichen senkrecht - und in der äusseren Raststellung der Halterung (5) im wesentlichen parallel zur Breitseite des Rückspiegels (4) steht.

21. Innenrückspiegel nach einem oder mehreren der Ansprüche 10 bis 15, dadurch gekennzeichnet, dass der Schwenkarm (6) in der äusseren Raststellung mit einer lösbaren Verriegelung (14, 14a, 16) im Ablagefach (2) arretiert ist.

22. Innenrückspiegel nach einem oder mehreren der Ansprüche 1 bis 14, dadurch gekennzeichnet, dass die Halterung (105, 205) über Parallelführungsarme (130, 131, 132, 153, 260, 261) mit dem Ablagefach (102, 202) verbunden ist.

23. Innenrückspiegel nach Anspruch 22, dadurch gekennzeichnet, dass die Halterung (105) über erste Parallelführungsarme (130, 131), welche die Halterung vertikal bewegen und zweite Parallelführungsarme (132, 133), welche die Halterung horizontal bewegen, mit dem Ablagefach (102) verbunden ist.

24. Innenrückspiegel nach Anspruch 23, dadurch gekennzeichnet, dass eine Verriegelung (130c, 145, 153, 143, 143, 148, 149a) vorgesehen ist, welche die horizontalen Parallelführungsarme (132, 133) erst dann freigibt, wenn die vertikalen Parallelführungsarme (130, 131) ihre Endstellung erreicht haben.

25. Innenrückspiegel nach Anspruch 22, dadurch gekennzeichnet, dass die Parallelführungsarme (260, 261) am Ablagefach (202) und an der Halterung (205) in einem Winkel angelenkt sind, sodass während der vertikalen Bewegung der Halterung gleichzeitig eine horizontale Verschiebung der Halterung erfolgt.

26. Innenrückspiegel nach einem oder mehreren der vorangehenden Ansprüche, dadurch gekennzeichnet, dass die Halterung (5, 105, 205, 302, 402, 900, 850) in der äusseren Raststellung vor dem Rückspiegel (4, 104, 204, 323, 423, 504) liegt.

27. Innenrückspiegel nach einem oder mehreren der vorangehenden Ansprüche, dadurch gekennzeichnet, dass die Halterung (5, 105, 205, 302, 402, 900) als Aufnahmefach für ein Aufbewahrungsgut (17, 303) ausgebildet ist.

28. Innenrückspiegel nach einem oder mehreren der vorangehenden Ansprüche, dadurch gekennzeichnet, dass die Halterung (5, 105, 205, 302, 402, 900) im wesentlichen einen L-förmigen Querschnitt aufweist.

29. Innenrückspiegel nach einem oder mehreren der vorangehenden Ansprüche, dadurch gekennzeichnet, dass an der Halterung (5, 105, 205, 302, 402, 900) eine Brillenaufnahme (18, 302a, 314, 314a, 315, 318, 417, 800) angeordnet ist, welche die Brille (17, 303) in der Halterung festhält.

30. Innenrückspiegel nach Anspruch 29, dadurch gekennzeichnet, dass die Breitseite der Brille (17,l 303) in der äusseren Raststellung der Halterung (5, 105, 205, 302, 402, 900) im wesentlichen parallel zur Ebene des Rückspiegels (4, 104, 204, 323, 423, 504, 850) steht und vor diesem in die Halterung eingesetzt bzw. aus dieser entnommen werden kann.

31. Innenrückspiegel nach einem der Ansprüche 29 oder 30, dadurch gekennzeichnet, dass die Breitseite der Brille (17, 303) in der inneren Raststellung der Halterung (5, 105, 205, 302, 402, 900) im wesentlichen parallel zur Ebene des Rückspiegels 4, 104, 204, 323, 423, 504, 850) steht.

32. Innenrückspiegel nach einem der Ansprüche 29 oder 30, dadurch gekennzeichnet, dass die Breitseite der Brille (17, 303) in der inneren Raststellung der Halterung (5, 105, 205, 302, 402, 900) im wesentlichen senkrecht zur Ebene des Rückspiegels (4, 104, 204, 323, 423, 504, 850) liegt.

33. Innenrückspiegel nach einem oder mehreren der Ansprüche 29 oder 32, dadurch gekennzeichnet, dass die Brille (17, 303) in der Brillenaufnahme (18, 302a, 314, 314a, 315, 318, 417, 800) so festgehalten wird, dass in der äusseren Raststellung der Halterung (5, 105, 205, 302, 402, 900) die Brillenbügel (17a, 304) auf- und zugeklappt werden können.

34. Innenrückspiegel nach einem oder mehreren der vorangehenden Ansprüche, dadurch gekennzeichnet, dass im Ablagefach (2, 102, 202, 301, 401, 502) eine elektrisch betriebener Ventilator (507) zur Belüftung des Innenraums angeordnet ist.

35. Innenrückspiegel nach einem oder mehreren der vorangehenden Ansprüche, dadurch gekennzeichnet, dass der Rückspiegel (104, 204, 323, 423, 504, 850) und das Ablagefach (2, 102, 202, 301, 401, 502) eine einheitliche Baugruppe bilden, welche über ein Konsolenstück (1, 101, 328, 501) drehbar mit der Kfzg.-Karosserie verbunden ist.

36. Innenrückspiegel nach einem oder mehreren der Ansprüche 6 bis 10, dadurch gekennzeichnet, dass die Bewegung zwischen dem Ablagefach (2, 102, 202, 301, 401, 502) und dem Träger (141, 490) bzw. zwischen dem Träger und der Halterung (5, 105, 205, 302, 402) erst freigegeben wird, wenn die jeweils andere Bewegung abgeschlossen ist.

## Claims

1. An interior rear-view mirror for a motor vehicle, having a storage compartment (2, 102, 202, 301, 401, 502) which is arranged behind the rear-view mirror (4, 104, 204, 323, 423, 504, 850) and has on its underside (102b, 301b) a housing opening (7, 107, 207, 308), and a holder (5, 105, 205, 302, 402, 900) movably connected to the storage compartment for receiving an article to be stored (17, 303), the holder being movable through the housing opening between an inner rest position, in which the holder is enclosed in the storage compartment, and an outer rest position below the rear-view mirror, in which the article to be stored can conveniently be removed from the holder or placed in it.

2. An interior rear-view mirror according to claim 1, characterized in that the housing opening (7, 107, 207, 308) is arranged to be closed by a cover (5a, 141a, 205b, 302c, 402b).

3. An interior rear-view mirror according to claim 2, characterized in that the cover (5a, 141a, 205b, 302c, 402b) is arranged on the holder (5, 105, 205, 302, 402, 900).

4. An interior rear-view mirror according to one or more of claims 1 to 3, characterized in that storage compartment (2, 102, 202, 301, 401, 502) and the holder (5, 105, 205, 302, 402, 900) are joined to one another so as to rotate or swivel.

5. An interior rear-view mirror according to one or more of claims 1 to 3, characterized in that the storage compartment (2, 102, 202, 301, 401, 502) and the holder (5, 105, 205, 302, 402, 900) are joined to one another by guide members (440, 441) so as to be longitudinally displaceable.

6. An interior rear-view mirror according to one or more of claims 1 to 3, characterized in that the storage compartment (2, 102, 202, 301, 401, 502) and the holder (5, 105, 205, 302, 402, 900) are joined to one another by a carrier (141, 490).

7. An interior rear-view mirror according to claim 6, characterized in that the storage compartment (2, 102, 202, 301, 401, 502) and the carrier (141, 490) are joined to one another so as to rotate or swivel.

8. An interior rear-view mirror according to claim 6, characterized in that the storage compartment (2, 102, 202, 301, 401, 502) and the carrier (141, 490) are joined to one another by guide members (440, 441) so as to be longitudinally displaceable.

9. An interior rear-view mirror according to one or more of claims 6 to 8, characterized in that the carrier (141, 490) and the holder (5, 105, 205, 302, 402, 900) are joined to one another so as to rotate or swivel.

10. An interior rear-view mirror according to one or more of claims 6 to 8, characterized in that the carrier (141, 410) and the holder (5, 105, 205, 302, 402, 900) are joined to one another by guide members so as to be longitudinally displaceable.

11. An interior rear-view mirror according to one or more of claims 1 to 10, characterized in that the holder (5, 105, 205, 302, 402, 900) is moved by the force of springs (10, 11, 140, 142) from one rest position into the other rest position.

12. An interior rear-view mirror according to one or more of claims 1 to 11, characterized in that the holder (5, 105, 205, 302, 402) is fixed in the inner rest position by way of a manually releasable locking mechanism (8, 9, 9a, 108, 208, 306) in the storage compartment (2, 102, 202, 301, 401, 502).

13. An interior rear-view mirror according to one or more of claims 1 to 12, characterized in that a grip means (9, 109, 209, 263, 332) is arranged on the holder (5, 105, 205, 302, 402, 900), by means of which the holder can be guided from one rest position into the other rest position.

14. An interior rear-view mirror according to claim 13, characterized in that the grip means (9, 109, 209, 263, 332) can be gripped in the inner rest position of the holder beneath the rear-view mirror (4, 104, 204, 323, 423, 504).

15. An interior rear-view mirror according to one or more of claims 1 to 14, characterized in that the holder (5, 105, 205, 302, 402, 900) is joined by way of a swivel arm (6) to the storage compartment (2, 102, 202, 301, 401, 502).

16. An interior rear-view mirror according to claim 15, characterized in that the swivel arm (6) is mounted in the storage compartment (2) so as to rotate about an axle (6a) parallel to the broad face of the rear-view mirror (4).

17. An interior rear-view mirror according to one of claims 15 or 16, characterized in that the holder (5) is mounted on the swivel arm (6) so as to rotate about an axle (6b) parallel to the broad face of the rear-view mirror (4).

18. An interior rear-view mirror according to one or more of claims 15 to 17, characterized in that the swivel arm (6) has an L-shaped cross-section.

19. An interior rear-view mirror according to one or more of claims 15 to 18, characterized in that the hinge (6b) by which the swivel arm (6) is joined to the holder (5) aligns in the outer rest position substantially with the plane of the rear-view mirror (4).

20. An interior rear-view mirror according to one or more of claims 15 to 19, characterized in that in the inner rest position of the holder (5) the swivel arm (6) is substantially perpendicular to the broad face of the rear-view mirror (4), and in the outer rest position of the holder (5) the swivel arm (6) is substantially parallel to the broad face of the rear-view mirror (4).

21. An interior rear-view mirror according to one or more of claims 10 to 15, characterized in that the swivel arm (6) is locked in the storage compartment (2) in the outer rest position by a releasable locking member (14, 14a, 16).

22. An interior rear-view mirror according to one or more of claims 1 to 14, characterized in that the holder (105, 205) is joined to the storage compartment (102, 202) by means of parallel guide arms (130, 131, 132, 153, 260, 261).

23. An interior rear-view mirror according to claim 22, characterized in that the holder (105) is joined to the storage compartment (102) by first parallel guide arms (130, 131), which move the holder vertically, and by second parallel guide arms (132, 133), which move the holder horizontally.

24. An interior rear-view mirror according to claim 23, characterized in that a locking member (130c, 145, 153, 143, 143, 148, 149a) is provided, which does not release the horizontal parallel guide arms (132, 133) until the vertical parallel guide arms (130, 131) have reached their end position.

25. An interior rear-view mirror according to claim 22, characterized in that the parallel guide arms (260, 261) are articulated on the storage compartment (202) and on the holder (205) at an angle, so that during vertical movement of the holder a horizontal displacement of the holder is effected at the same time.

26. An interior rear-view mirror according to one or more of the preceding claims, characterized in that, in its outer rest position, the holder (5, 105, 205, 302, 402, 900, 850) lies in front of the rear-view mirror (4, 104, 204, 323, 423, 504).

27. An interior rear-view mirror according to one or more of the preceding claims, characterized in that the holder (5, 105, 205, 302, 402, 900) is constructed as a storage compartment for an article to be stored (17, 303).

28. An interior rear-view mirror according to one or more of the preceding claims, characterized in that the holder (5, 105, 205, 302, 402, 900) has a substantially L-shaped cross-section.

29. An interior rear-view mirror according to one or more of the preceding claims, characterized in that a spectacle support (18, 302a, 314, 314a, 315, 318, 417, 800) which holds the spectacles (17, 303) securely in the holder is arranged on the holder (5, 105, 205, 302, 402, 900).

30. An interior rear-view mirror according to claim 29, characterized in that the broad face of the spectacles (17, 303) in the outer rest position of the holder (5, 105, 205, 302, 402, 900) is substantially parallel to the plane of the rear-view mirror (4, 104, 204, 323, 423, 504, 850) and in front of this can be inserted into the holder or removed therefrom.

31. An interior rear-view mirror according to one of claims 29 or 30, characterized in that the broad face of the spectacles (17, 303) in the inner rest position of the holder (5, 105, 205, 302, 402, 900) is substantially parallel to the plane of the rear-view mirror (4, 104, 204, 323, 423, 504, 850).

32. An interior rear-view mirror according to one of claims 29 or 30, characterized in that the broad face of the spectacles (17, 303) in the inner rest position of the holder (5, 105, 205, 302, 402, 900) is substantially perpendicular to the plane of the rear-view mirror (4, 104, 204, 323, 423, 504, 850).

33. An interior rear-view mirror according to one or more of claims 29 or 32, characterized in that the spectacles (17, 303) are held in the spectacle support (18, 302a, 314, 314a, 315, 318, 417, 800) so that in the outer rest position of the holder (5, 105, 205, 302, 402, 900) the side-pieces (17a, 304) of the spectacles can be opened out and folded up.

34. An interior rear-view mirror according to one or more of the preceding claims, characterized in that an electrically operated fan (507) is arranged in the storage compartment (2, 102, 202, 301, 401, 502) to ventilate the interior thereof.

35. An interior rear-view mirror according to one or more of the preceding claims, characterized in that the rear-view mirror (104, 204, 323, 423, 504, 850) and the storage compartment (2, 102, 202, 301, 401, 502) form a single assembly which is rotatably joined by means of a bracket element (1, 101, 328, 501) to the vehicle bodywork.

36. An interior rear-view mirror according to one or more of claims 6 to 10, characterized in that the movement between the storage compartment (2, 102, 202, 301, 401, 502) and the carrier (141, 490) and between the carrier and the holder (5, 105, 205, 302, 402) is not initiated until the respective other movement has finished.

## Revendications

1. Rétroviseur intérieur pour véhicule automobile, comprenant un vide-poches (2, 102, 202, 301, 401, 502) qui est disposé derrière le rétroviseur (4, 104, 204, 323, 423, 504, 850) et dont le boîtier présente un orifice (7, 107, 207, 308) à sa face inférieure (102b, 301b), et un organe de retenue (5, 105, 205, 302, 402, 900) relié au vide-poches avec faculté de mouvement, pour recevoir un objet stocké (17, 303), l'organe de retenue étant mobile, à travers l'orifice du boîtier, entre une position intérieure d'encliquetage dans laquelle l'organe de retenue est enchâssé dans le vide-poches, et une position extérieure d'encliquetage au-dessous du rétroviseur, dans laquelle l'objet stocké peut, respectivement, être prélevé de l'organe de retenue ou inséré dans ce dernier.

2. Rétroviseur intérieur selon la revendication 1, caractérisé par le fait que l'orifice (7, 107, 207, 308) du boîtier peut être obturé par une pièce de recouvrement (5a, 141a, 205b, 302c, 402b).

3. Rétroviseur intérieur selon la revendication 2, caractérisé par le fait que la pièce de recouvrement (5a, 141a, 205b, 302c, 402b) est disposée sur l'organe de retenue (5, 105, 205, 302, 402, 900).

4. Rétroviseur intérieur selon l'une ou plusieurs des revendications 1 à 3, caractérisé par le fait que le vide-poches (2, 102, 202, 301, 401, 502) et l'organe de retenue (5, 105, 205, 302, 402, 900) sont reliés l'un à l'autre avec faculté respective de rotation ou de pivotement.

5. Rétroviseur intérieur selon l'une ou plusieurs des revendications 1 à 3, caractérisé par le fait que le vide-poches (2, 102, 202, 301, 401, 502) et l'organe de retenue (5, 105, 205, 302, 402, 900) sont reliés l'un à l'autre avec faculté de coulissement longitudinal, par l'intermédiaire de guides (440, 441).

6. Rétroviseur intérieur selon l'une ou plusieurs des revendications 1 à 3, caractérisé par le fait que le vide-poches (2, 102, 202, 301, 401, 502) et l'organe de retenue (5, 105, 205, 302, 402, 900) sont reliés l'un à l'autre par l'intermédiaire d'un support (141, 490).

7. Rétroviseur intérieur selon la revendication 6, caractérisé par le fait que le vide-poches (2, 102, 202, 301, 401, 502) et le support (141, 490) sont reliés l'un à l'autre avec faculté respective de rotation ou de pivotement.

8. Rétroviseur intérieur selon la revendication 6, caractérisé par le fait que le vide-poches (2, 102, 202, 301, 401, 502) et le support (141, 490) sont reliés l'un à l'autre avec faculté de coulissement longitudinal, par l'intermédiaire de guides (440, 441).

9. Rétroviseur intérieur selon l'une ou plusieurs des revendications 6 à 8, caractérisé par le fait que le support (141, 490) et l'organe de retenue (5, 105, 205, 302, 402, 900) sont reliés l'un à l'autre avec faculté respective de rotation ou de pivotement.

10. Rétroviseur intérieur selon l'une ou plusieurs des revendications 6 à 8, caractérisé par le fait que le support (141, 410) et l'organe de retenue (5, 105, 205, 302, 402, 900) sont reliés l'un à l'autre avec faculté de coulissement longitudinal, par l'intermédiaire de guides.

11. Rétroviseur intérieur selon l'une ou plusieurs des revendications 1 à 10, caractérisé par le fait que l'organe de retenue (5, 105, 205, 302, 402, 900) est déplacé, de l'une à l'autre des positions d' encliquetage, sous l'action de la force de ressorts (10, 11, 140, 142).

12. Rétroviseur intérieur selon l'une ou plusieurs des revendications 1 à 11, caractérisé par le fait que l'organe de retenue (5, 105, 205, 302, 402) est consigné fermement à demeure dans le vide-poches (2, 102, 202, 301, 401, 502), dans la position intérieure d'encliquetage, par l'intermédiaire d'un organe de verrouillage (8, 9, 9a, 108, 208, 306) déblocable manuellement.

13. Rétroviseur intérieur selon l'une ou plusieurs des revendications 1 à 12, caractérisé par la présence, sur l'organe de retenue (5, 105, 205, 302, 402, 900), d'une poignée (9, 109, 209, 263, 332) au moyen de laquelle l'organe de retenue peut être guidé d'une position d'encliquetage à l'autre position d'encliquetage.

14. Rétroviseur intérieur selon la revendication 13, caractérisé par le fait que la poignée (9, 109, 209, 263, 332) peut être saisie dans la position intérieure d'encliquetage de l'organe de retenue, au-dessous du rétroviseur (4, 104, 204, 323, 423, 504).

15. Rétroviseur intérieur selon l'une ou plusieurs des revendications 1 à 14, caractérisé par le fait que l'organe de retenue (5, 105, 205, 302, 402, 900) est relié au vide-poches (2, 102, 202, 301, 401, 502) par l'intermédiaire d'un bras pivotant (6).

16. Rétroviseur intérieur selon la revendication 15, caractérisé par le fait que le bras pivotant (6) est monté à rotation dans le vide-poches (2), autour d'un axe (6a), parallèlement au côté large du rétroviseur (4).

17. Rétroviseur intérieur selon l'une des revendications 15 ou 16, caractérisé par le fait que l'organe de retenue (5) est monté à rotation sur le bras pivotant (6), autour d'un axe (6b), parallèlement au côté large du rétroviseur (4).

18. Rétroviseur intérieur selon l'une ou plusieurs des revendications 15 à 17, caractérisé par le fait que le bras pivotant (6) possède une section transversale de configuration en L.

19. Rétroviseur intérieur selon l'une ou plusieurs des revendications 15 à 18, caractérisé par le fait que, dans la position extérieure d'encliquetage, l'articulation (6b), par l'intermédiaire de laquelle le bras pivotant (6) est relié à l'organe de retenue (5), est pour l'essentiel alignée avec le plan du rétroviseur (4).

20. Rétroviseur intérieur selon l'une ou plusieurs des revendications 15 à 19, caractérisé par le fait que le bras pivotant (6) est pour l'essentiel perpendiculaire au côté large du rétroviseur (4) dans la position intérieure d'encliquetage de l'organe de retenue (5), et pour l'essentiel parallèle audit côté large dans la position extérieure d'encliquetage dudit organe de retenue (5).

21. Rétroviseur intérieur selon l'une ou plusieurs des revendications 10 à 15, caractérisé par le fait que, dans la position extérieure d'encliquetage, le bras pivotant (6) est arrêté dans le vide-poches (2) par un système de verrouillage (14, 14a, 16) pouvant être débloqué.

22. Rétroviseur intérieur selon l'une ou plusieurs des revendications 1 à 14, caractérisé par le fait que l'organe de retenue (105, 205) est relié au vide-poches (102, 202) par l'intermédiaire de bras (130, 131, 132, 153, 260, 261) de guidage parallèle.

23. Rétroviseur intérieur selon la revendication 22, caractérisé par le fait que l'organe de retenue (105) est relié au vide-poches (102) par l'intermédiaire de premiers bras (130, 131) de guidage parallèle, imprimant un mouvement vertical à l'organe de retenue, et de seconds bras (132, 133) de guidage parallèle, imprimant un mouvement horizontal audit organe de retenue.

24. Rétroviseur intérieur selon la revendication 23, caractérisé par le fait qu'il est prévu un système de verrouillage (130c, 145, 153, 143, 148, 149a) qui libère les bras horizontaux (132, 133) de guidage parallèle uniquement lorsque les bras verticaux (130, 131) de guidage parallèle ont atteint leur position extrême.

25. Rétroviseur intérieur selon la revendication 22, caractérisé par le fait que les bras (260, 261) de guidage paralléle sont articulés sur le vide-poches (202) et sur l'organe de retenue (205) en décrivant un angle, de sorte que le mouvement vertical de l'organe de retenue s'accompagne simultanément d'un coulissement horizontal dudit organe de retenue.

26. Rétroviseur intérieur selon l'une ou plusieurs des revendications précédentes, caractérisé par le fait que, dans la position extérieure d'encliquetage, l'organe de retenue (5, 105, 205, 302, 402, 900, 850) se trouve devant le rétroviseur (4, 104, 204, 323, 423, 504).

27. Rétroviseur intérieur selon l'une ou plusieurs des revendications précédentes, caractérisé par le fait que l'organe de retenue (5, 105, 205, 302, 402, 900) est réalisé sous la forme d'un casier de réception d'un objet stocké (17, 303).

28. Rétroviseur intérieur selon l'une ou plusieurs des revendications précédentes, caractérisé par le fait que l'organe de retenue (5, 105, 205, 302, 402, 900) possède, pour l'essentiel, une section transversale de configuration en L.

29. Rétroviseur intérieur selon l'une ou plusieurs des revendications précédentes, caractérisé par la présence, sur l'organe de retenue (5, 105, 205, 302, 402, 900), d'un compartiment (18, 302a, 314, 314a, 315, 318, 417, 800) à lunettes qui immobilise la paire de lunettes (17, 303) dans ledit organe de retenue.

30. Rétroviseur intérieur selon la revendication 29, caractérisé par le fait que, dans la position extérieure d'encliquetage de l'organe de retenue (5, 105, 205, 302, 402, 900), le côté large de la paire de lunettes (17, 303) est pour l'essentiel parallèle au plan du rétroviseur (4, 104, 204, 323, 423, 504, 850) et peut, respectivement, être inséré dans l'organe de retenue ou prélevé de ce dernier devant ledit rétroviseur.

31. Rétroviseur intérieur selon l'une des revendications 29 ou 30, caractérisé par le fait que, dans la position intérieure d'encliquetage de l'organe de retenue (5, 105, 205, 302, 402, 900), le côté large de la paire de lunettes (17, 303) est pour l'essentiel parallèle au plan du rétroviseur (4, 104, 204, 323, 423, 504, 850).

32. Rétroviseur intérieur selon l'une des revendications 29 ou 30, caractérisé par le fait que, dans la position intérieure d'encliquetage de l'organe de retenue (5, 105, 205, 302, 402, 900), le côté large de la paire de lunettes (17, 303) est pour l'essentiel perpendiculaire au plan du rétroviseur (4, 104, 204, 323, 423, 504, 850).

33. Rétroviseur intérieur selon l'une ou plusieurs des revendications 29 ou 32, caractérisé par le fait que la paire de lunettes (17, 303) est consignée fermement à demeure, dans le compartiment (18, 302a, 314, 314a, 315, 318, 417, 800) à lunettes, de telle sorte que les branches (17a, 304) des lunettes puissent être déployées et repliées dans la position extérieure d'encliquetage de l'organe de retenue (5, 105, 205, 302, 402, 900).

34. Rétroviseur intérieur selon l'une ou plusieurs des revendications précédentes, caractérisé par le fait qu'un ventilateur (507) actionné électriquement est disposé, dans le vide-poches (2, 102, 202, 301, 401, 502), en vue de ventiler l'espace interne.

35. Rétroviseur intérieur selon l'une ou plusieurs des revendications précédentes, caractérisé par le fait que le rétroviseur (104, 204, 323, 423, 504, 850) et le vide-poches (2, 102, 202, 301, 401, 502) forment un groupe structurel unitaire relié à la carrosserie du véhicule automobile, avec faculté de rotation, par l'intermédiaire d'une pièce (1, 101, 328, 501) du type console.

36. Rétroviseur intérieur selon l'une ou plusieurs des revendications 6 à 10, caractérisé par le fait que le mouvement, s'opérant respectivement entre le vide-poches (2, 102, 202, 301, 401, 502) et le support (141, 490), ou entre ledit support et l'organe de retenue (5, 105, 205, 302, 402), est autorisé uniquement lorsque l'autre mouvement considéré est achevé.
